# EUROPÄISCHE PATENTANMELDUNG

(11) **EP 1 188 628 A2**
(43) Veröffentlichungstag der Anmeldung: **20.03.2002**
(21) Anmeldenummer: 01116290.6
(22) Anmeldetag: 05.07.2001
(51) Int. Cl.: B60S 3/06

(54) **Fahrzeugwaschanlage**

(30) Priorität: 01.09.2000 DE 10043210; 03.09.2000 DE 10043248; 20.10.2000 DE 10052085
(71) Anmelder: Otto Christ AG, Autowaschanlagen, 87734 Benningen (DE)
(72) Erfinder: Christ, Otto, 87700 Memmingen (DE)
(74) Vertreter: Ernicke, Hans-Dieter, Dipl.-Ing.

(57) **Zusammenfassung**

Die Erfindung befasst sich mit dem Problem, die in einer Fahrzeugwaschanlage befindlichen, drehbar angetriebenen Waschbürsten (1,2) in ihrer Waschstellung an den Fahrzeugflächen in einen konstanten optimalen Anlagedruck zu halten. Zu diesem Zweck werden am Portal (3) linear geführte Laufkatzen(6), an denen die Waschbürsten (1,2) gelagert sind, mit einem Schlupfantrieb, bestehend aus einem Elektromotor (9) und einer anschließenden elektromagnetischen Schlupfkupplung (10), insbesondere Hysteresekupplung, bewegt, der ein der optimalen Eindringtiefe der Fahrzeugfläche in die rotierenden Borsten proportionales, einstellbares Drehmoment überträgt, wobei der Schlupf dieser elektromagnetischen Schlupfkupplung unzulässige Eindringtiefen verhindert und abweichende Fahrzeugflächen ausgleicht.

## Beschreibung

Die Erfindung bezieht sich auf eine Fahrzeugwaschanlage mit drehbar angetriebenen und in Laufkatzen gelagerten horizontalen und vertikalen Waschbürsten, deren Laufkatzen an einem ortsfesten oder hin- und herbeweglichen Portal linear geführt und angetrieben sind.

Bei vorbekannten Fahrzeugwaschstraßen wird das zu waschende Fahrzeug mittels einer Schleppkette durch eine Portalanordnung geführt, an der vertikale Waschbürsten querbeweglich und horizontale Waschbürsten höhenbeweglich geführt sind. Bei solchen Waschstraßen ist es auch bekannt, auf ortsfesten Portalen längsbewegliche Querjoche zu führen, an denen ebenfalls Waschbürsten hängend gelagert sind. Diese Querjoche haben die Aufgabe, dem Fahrzeugheck unter Aufrechterhaltung einer intensiven Waschpflege nachzufolgen.

Es sind ferner verfahrbare Portalwaschanlagen bekannt, die längs des stehenden Fahrzeuges hin- und herbewegt werden.

In allen Fällen kommt es darauf an, den Wascheffekt dadurch konstant zu halten, dass die Waschbürsten mit möglichst gleichbleibendem Anpressdruck gegen die zu zugeordnete Fahrzeugfläche angedrückt wird. Diese Bedingung bereitet jedoch Probleme, weil Fahrzeuge unterschiedlicher Länge, Höhe und Breite in unregelmäßiger Folge gewaschen werden müssen.

Aus der DE-PS 35 44 390 ist ein Verfahren und eine Vorrichtung zum Waschen von Fahrzeugen in einer Waschstraße mit verfahrbarem Portal und horizontaler Waschbürste bekannt, bei der die Erkennung des Seitenprofils eines Fahrzeugs mittels Lichtschrankenmessung erfolgt. Entsprechend den Lichtsignalen wird das Portal verfahren. In Waschstraßen ist bekanntlich die Atmosphäre durch Spritzwasser, Wasserdampf und Schmutzteilchen belastet, wodurch die Lichtschrankensteuerung beeinträchtigt werden kann.

Der Erfindung liegt die Aufgabe zugrunde, einen Antrieb der die Waschbürsten haltenden Laufkatzen so zu gestalten, dass unter Meidung von Lichtschrankenmessungen die einzelne Waschbürste an die zugeordnete Fahrzeugfläche unabhängig von der Dimension des Fahrzeuges bis zu einer optimalen Eintauchtiefe der Fahrzeugfläche in die Waschbürsten herangeführt werden kann, wobei die optimale Eintauchtiefe möglichst konstant gehalten werden kann.

Dieses Problem wird mit der Erfindung dadurch gelöst, dass an der einzelnen Laufkatze ein für deren Bewegung bestimmter Elektromotor mit einer nachgeordneten elektromagnetischen Schlupfkupplung, insbesondere Hysteresekupplung, befestigt ist, deren Abtriebselement mit einem am Portal angeordneten Getriebeteil zusammenwirkt.

Es hat sich bewehrt, das Abtriebselement als Zahnritzel und das Getriebeteil als Zahnstange auszubilden. Alternativ kann aber auch das Abtriebselement und das Getriebeteil als Zahnriementrieb ausgebildet sein, wodurch nicht ausgeschlossen werden soll, dass auch Ketten- oder Seiltriebe verwendet werden können.

Wesentlich ist die Funktion der elektromagnetischen Schlupfkupplung, die als käufliches Aggregat vorbekannt ist. Bei Einschalten des Elektromotors wird die Laufkatze über die elektromagnetische Schlupfkupplung angetrieben, bis die an ihr hängende Waschbürste, die sich motorisch in Drehung befindet, in Kontakt zur zugeordneten Fahrzeugfläche kommt. Hierbei spielt es keine Rolle, welchen Weg die Laufkatze zurückzulegen hat. Sobald die rotierenden Borsten Kontakt mit der Fahrzeugfläche erhalten, erhöht sich durch den Widerstand das erforderliche Drehmoment zum Antrieb der Waschbürste. Hier setzt die Wirkung der elektromagnetischen Schlupfkupplung ein, die auf ein vorbestimmtes Drehmoment eingestellt werden kann. Sobald nämlich der Reibungswiderstand durch Eintauchen der Fahrzeugfläche in die Waschborsten ein erwünschtes Maß erreicht hat, reagiert die elektromagnetische Kupplung in den Schlupfzustand, was dazu führt, dass die zugeordnete Laufkatze nicht näher an das Fahrzeug heranbewegt werden kann. Selbst unregelmäßige Konturenflächen des Fahrzeuges werden von der elektromagnetischen Kupplung ausgeglichen, indem sich der Schlupfzutand an den sich ändernden Reibungswiderstand der Waschbürsten anpasst und das zur Überwindung des Reibungswiderstandes erforderliche Drehmoment einregelt.

Dieses Funktionsprinzip der Erfindung ist an verschiedenen Stellen der Fahrzeugwaschanlage mit Erfolg anwendbar.

Bei-einem ersten Ausführungsbeispiel wo die einzelne Laufkatze am Querträger eines ortsfesten oder verfahrbaren Portals geführt ist und jeweils eine hängend angeordnete vertikale Waschbürste trägt. Diese Anordnung ist an sich vorbekannt. Ihre erfindungsgemäße Funktion hält sie jedoch durch die Anordnung der elektromagnetischen Schlupfkupplung im elektromotorischen Antrieb der Laufkatze.

In einem zweiten Ausführungsbeispiel ist die einzelne Laufkatze an beiden Pfosten eines ortsfesten oder verfahrbaren Portals vertikal beweglich geführt und trägt eine horizontale Waschbürste, wobei der Elektromotor mit der elektromagnetischen Schlupfkupplung von der Laufkatze distanziert angeordnet und mit ihr durch ein Getriebeteil verbunden sein kann. Hierbei ist es zweckmäßig, als Getriebeteil einen Ketten- oder Seilzug zu verwenden und den Elektromotor mit elektromagnetischer Schlupfkupplung zum Antrieb einer Seilrolle oder eines Kettenritzels einzusetzen.

Schließlich bietet die Erfindung die Möglichkeit, die einzelne Laufkatze als Bestandteil eines Querjoches auszubilden, das auf Längsträgern eines ortsfesten Portals parallel zur Längsache des zu waschenden Fahrzeuges hin-und her verschiebbar geführt ist und seinerseits Führungen für Laufkatzen von vertikalen Waschbürsten aufweist.

Hierbei handelt es sich um ein bewegliches Portal auf einem ortsfesten Portal, was an sich auch bekannt ist und zwar zu dem Zweck, die an dem beweglichen Portal hängenden Waschbürsten dem durch die Waschanlage geschleppten Heck des Fahrzeuges nachfolgen zu lassen, ohne den Bürstenkontakt abreißen zu lassen.

Mit der Erfindung wird jedoch erreicht, dass die Längsbewegung des Querjoches parallel zur Fahrzeugschlepprichtung dank des elektromagnetischen Kupplungstriebes so eingestellt werden kann, dass z.B. die horizontale Waschbürste beim Übergang von der Kofferraumfläche auf die Heckfläche sofort Kontakt zur Heckfläche besitzt, ohne dass eine Unterbrechung der optimalen Bürstenandruckkraft an der Heckfläche entsteht. Hierbei wird das Querjoch mit gleicher Geschwindigkeit wie das geschleppte Fahrzeug voranbewegt, ohne dass die Notwendigkeit besteht, die Nachfolgegeschwindigkeit des Querjoches vorübergehend zu erhöhen.

Schließlich sieht die Erfindung im Rahmen einer weiteren Ausgestaltung vor, dass am Querjoch ein obenseitig hängend gelagertes Schwingenpaar zur Führung von Laufkatzen für einen horizontale Waschbürste angeordnet ist. Deren Laufkatzen sind mit einem aus Elektromotor und elektromagnetischen Schlupfkupplung bestehenden Hubantrieb längs der Schwingen verstellbar, wobei der Rotationsantrieb für die horizontale Waschbürste Drehrichtungsumkehr ausgebildet ist. Dieses Schwingenpaar ist im Ausführungsbeispiel mit einem aus Elektromotor und elektromagnetischer Schlupfkupplung bestehenden Schwenkantrieb verbunden, der die horizontale Waschbürste speziell beim Bearbeiten der Heckfläche eines geschleppten Fahrzeuges in ständigen Waschkontakt mit der Heckfläche hält.

Wäre kein Schwenkantrieb vorhanden, könnte die horizontale Waschbürste beim Übergang vom Kofferraumdeckel zur Heckfläche, während das zu waschende Fahrzeug geschleppt wird, den Kontakt zur Heckfläche verlieren, was aber durch den Schwenkantrieb vermieden wird.

Im Allgemeinen ist es zweckmäßig zwischen dem Elektromotor und der elektromagnetischen Schlupfkupplung ein Untersetzungsgetriebe anzuordnen, das in jeder vorbekannten Form ausgebildet sein kann, beispielsweise als Zahnradgetriebe, Zyclogetriebe, Schneckengetriebe, Planetengetriebe und dergleichen.

In der elektromagnetischen Schlupfkupplung ist bevorzugt eine axial wirkende Einstellanordnung zur Veränderung des Luftspaltes zwischen dem Anker und dem Rotor vorgesehen. Zu diesem Zweck kann beispielsweise der Anker zweiteilig ausgebildet sein, wobei das eine am anderen Teil axial verschiebbar geführt ist.

Ein weiterer Vorteil der Erfindung kann dadurch erreicht werden, dass der Schlupf der Magnetkupplungen mit Hilfe einer anliegenden Spannung an den Magnetspulen variierbar ist. Je höher die anliegende Spannung ist, desto geringer wird der Schlupf der Kupplung. Somit kann durch die Veränderung der Spannung der Anpressdruck, insbesondere bei den vertikalen Bürsten, verändert werden. Vorzugsweise wird die anliegende Spannung durch eine elektronische Steuerung geregelt.

Dies hat besondere Bedeutung beim Waschen der Front- und Heckflächen des Fahrzeuges mit Hilfe der vertikalen Waschbürsten. Die Magnetkupplung wird mit einer höheren Spannung angefahren, so dass der Schlupf gegen null geht. Dies führt dazu, dass die vertikalen Waschbürsten über die Mitte der Stirnflächen des Fahrzeuges hinaus hin- und herbewegt werden und damit eine intensive Reinigung dieser Flächen ermöglichen.

Diese und weitere Merkmale der Erfindung ergeben sich aus der Zeichnung. In Ihr ist die Erfindung schematisch und bespielsweise dargestellt. Es zeigen:
- Figur 1:: eine Vorderansicht eines ortsfesten oder verfahrbaren Portals mit am Querträger geführten Laufkatzen für die Anordnung vertikaler Waschbürsten,
- Figur 2:: eine Vorderansicht eines Portals gemäß Figur 1 mit in den Pfosten vertikal geführten Laufkatzen zur Führung einer horizontalen Waschbürste,
- Figur 3:: eine Seitenansicht eines ortsfesten Portals, auf dessen Längsträger eine als Querjoch ausgebildete Laufkatze parallel zur Schlepprichtung des Fahrzeuges hin-und herbeweglich geführt ist,
- Figur 4:: eine Seitenansicht eines Portals gemäß Figur 3 mit einer an den Längsträgern geführten Laufkatze, die ein obenseitig hängend gelagertes Schwingenpaar zur Führung einer horizontalen Waschbürste trägt,
- Figur 5:: einen Teilschnitt durch einen Elektromotor und eine sich daran anschließende elektromagnetische Kupplung zum Antrieb einer Laufkatze,
- Figur 6:: einen Schnitt durch einen Elektromotor und eine daran sich anschließende elektromagnetische Schlupfkupplung nach Art einer Hysteresekupplung und
- Figuren 7 und 8:: Teilschnitte durch eine elektromagnetische Schlupfkupplung mit einem zweiteiligen Anker, dessen Teile achsparallel relativ zueinander verstellbar sind.

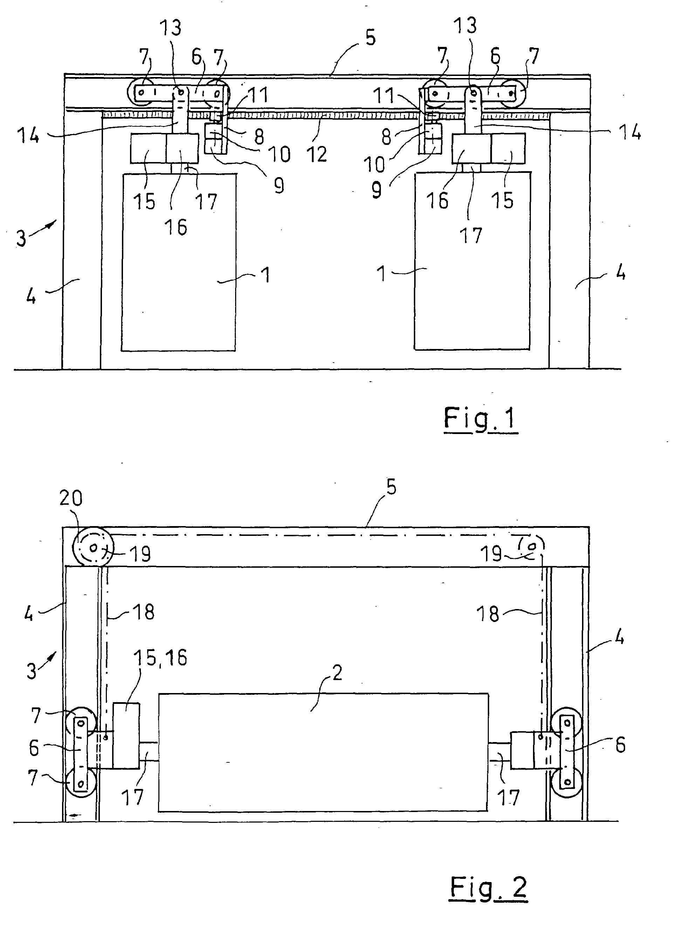

Im Beispiel der Figur 1 sind zwei vertikale Waschbürsten (1) dargesellt, die hängend an Laufkatzen (6) bei (13) gelenkig geführt sind. Die Laufkatzen (6) gleiten über Laufrollen (7) in einem Querträger (5), der bevorzugt aus Leichtmetall-Strangpreß-Hohlprofilen hergestellt ist. Dieser Querträger (5) ist mit Pfosten (4) zur Bildung eines Portals (3) verbunden, wobei das Portal (3) ortsfest oder auch verfahrbar ausgebildet sein kann. Auch sind die Laufrollen (7) nur symbolisch dargestellt. Die Laufkatze (6) kann durch weitere nicht dargestellte Führungsrollen seitlich abgestützt sein.

Von der einzelnen Laufkatze (6) geht ein als Ausleger ausgebildeter Bügel (8) abwärts, an dem ein Elektromotor (9) mit einer elektromagnetischen Schlupfkupplung (10) zum Antrieb eines Abtriebselementes (11) befestigt sind. Dieses Abtriebselement (11), das beispielsweise als Zahnradritzel ausgebildet sein kann, wirkt mit einem Getriebeteil (12), beispielsweise einer Zahnstange, zusammen, das sich längs des Querträgers (5) ortsfest befindet. Durch Abwälzung des Ritzels (11) an der Zahnstange (12) wird die Laufkatze (6) in der Führung des Querträgers (5) hin- und herbewegt.

An der Achse (14) -der vertikalen Waschbürste (1) befindet sich ein Elektromotor (15) mit einem Winkelgetriebe (16) zum Antrieb einer Bürstenwelle (17), an der in überlicher Weise die Borsten der Waschbürste (1) befestigt sind.

Das Funktionsprinzip dieser Anordnung ist folgendes: In der Ausgangsstellung befinden sich die vertikalen Waschbürsten (1) in den im weitesten voneinander entfernten Positionen, also nahe der Pfosten (4). In der Regel ist die Breite des Fahrzeuges geringer als der Abstand zwischen den vertikalen Waschbürsten (1). Um beispielsweise die Seitenflächen des Fahrzeuges zu waschen, müssen folglich die vertikalen Waschbürsten (1) zunächst bis an die Seitenflächen heranbewegt werden. Zusätzlich ist ein weiterer Weg der vertikalen Waschbürsten in Richtung zur zu waschenden Fahrzeugfläche zurückzulegen, um die optimale Eindringtiefe der Fahrzeugfläche in die rotierenden Borsten zu erreichen. Hier setzt die Wirkung der elektromagnetischen Schlupfkupplung (10) ein, die auf ein bestimmtes Drehmoment eingestellt ist, welches proportional zu dem Reibungswiderstand ist, den die Borsten beim Waschen der Fahrzeugfläche erzeugen. Wenn das eingestellte Drehmoment erreicht ist, was mit der optimalen Reinigungswirkung der Waschbürste identisch ist, geht die elektromagnetische Kupplung (10) in den. Schlupfzustand über und verhindert ein weiteres Bewegen der Laufkatze (6) in Richtung zur Fahrzeugfläche. Wenn sich die Fahrzeugfläche in ihrer Kontur verändert, gleicht die elektromagnetische Schlupfkupplung (10) über ihre Schlupfwirkung diese Änderung aus, so dass immer ein optimaler Reinigungseffekt ohne Gefährdung der Fahrzeugfläche gewährleistet ist.

Andererseits bietet die Erfindung die Möglichkeit, den Schlupf der Magnetkupplungen mit Hilfe einer an den Magnetspulen anliegenden Spannung zu variieren. Je höher die Spannung-ist, desto geringer wird der Schlupf der Kupplung. Durch diese Spannungsänderung kann somit der Anpressdruck der Waschbürste variiert werden. Vorzugsweise wird die Spannung durch eine elektronische Steuerung geregelt.

Die vertikalen Waschbürsten sind somit in der Lage, die Stirnflächen des Fahrzeuges über deren Mitte hinweg zu waschen. Beim Übergang der vertikalen Waschbürsten von den Seitenflächen zu den Stirnflächen des Fahrzeuges ziehen sich die Waschbürsten selbsttätig nach innen und bleiben damit in ständigem idealen Kontakt zur Stirnfläche, ohne dass die Relativbewegung zwischen Fahrzeug und Portal den Kontakt abreißen lässt.

Wenn die Anordnung gemäß Figur 1 bei einer verfahrbaren Portalanlage eingesetzt werden soll, bei welcher das Fahrzeug steht und das Portal (3) längs des Fahrzeuges hin- und herbewegt wird, dann kann dieser Bewegungsantrieb des Portals (3) ebenfalls durch eine elektromotorisch angetriebene elektromagnetische Kupplung (9,10) erfolgen, was in Figur 1 nicht dargestellt ist.

In Figur 2 sind in den Pfosten (4) des Portals (3) vertikal bewegliche Laufkatzen (6) gezeigt, welche eine horizontale Waschbürste (2) tragen. Diese wird durch Elektromotor (15) mit Winkelgetriebe (16) angetrieben. Zur vertikalen Hubbewegung der-Waschbürste (2) wird in diesem Fall ein Zugseil (18) oder Kettentrieb verwendet, wobei das Zugseil über Umlenkrollen (19) geführt wird, von denen eine über einen Elektromotor (20) mit elektromagnetischer Kupplung (10) angetrieben wird. In diesem Fall ist die elektromagnetische Kupplung nicht an der Laufkatze (6) angeordnet, obwohl diese Möglichkeit beim Beispiel der Figur 2 nicht ausgeschlossen wird.

Auch hier wirkt das Funktionsprinzip der Erfindung. Wenn nämlich-der Anpressdruck der horizontalen Waschbürste an einer Stirnfläche des Fahrzeuges zu groß wird, dann sorgt der Hubantrieb (20) für eine schnellere Hubbewegung der Waschbürste (2) längs der vertikalen Fahrzeugfläche.

Beim Ausführungsbeispiel der Figur 2 kann ebenfalls das Portal (3) in Richtung parallel zur Fahrzeuglängsachse hin- und herbeweglich angeordnet sein, wobei auch für diesen Antrieb ein Elektromotor (9) mit elektromagnetischer Schlupfkupplung verwendet werden kann.

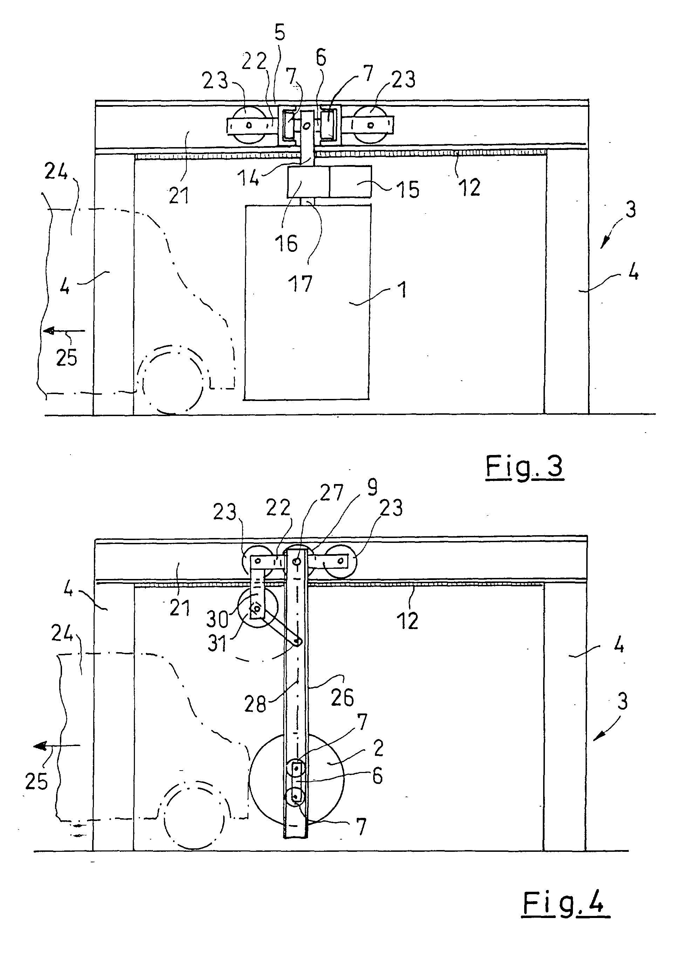

Beim Ausführungsbeispiel der Figuren 3 und 4 wird das Problem behandelt, wie in einer Fahrzeugwaschstraße, in der das Fahrzeug mit Schleppkette voranbewegt wird, die Heckfläche des Fahrzeuges gleichmäßig intensiv bearbeitet werden kann. Im Beispiel der Figur 3 geschieht dies durch vertikale Waschbüsten (1), die im Sinne des Beispiels der Figur 1 in Laufkatzen (6) aufgehängt sind. Das Portal, welches in den Figuren 3 und 4 in Seitenansicht dargestellt ist, ist ortsfest ausgebildet und weist die Pfosten (4) sowie einen Längsträger (21) an jeder Seite auf. Dieser Längsträger (21) ist als Leichtmetall-Strangpreß-Hohlprofil ausgebildet und dient zur Führung eines als Querjoch (22) ausgebildeten Laufkatze mit den Laufrädern (23). Dieses Querjoch (22) trägt den über die Breite der Waschanlage reichenden Querträger (5), in dem die Laufkatzen (6) für die vertikalen Waschbürsten (1) geführt sind.

Hierbei handelt es sich also um eine zweidimensionale Beweglichkeit der vertikalen Waschbürsten im Sinne des Beispiels der Figur 1 und zusätzlich längs der Schlepprichtung des Fahrzeugs (24).

In Figur 3 ist nicht dargestellt, der Antrieb für das Querjoch (22) im Längsträger (21). Dieser Antrieb ist aber analog dem Beispiel der Figur 1 zu konstruieren, wobei die Zahnstange (12) an der Unterseite des Längsträgers (21) angeordnet ist.

Im Beispiel der Figur 3 entsteht das Problem, dass die vertikale Waschbürste (1) beim Übergang von der Reinigung der Seitenflächen in die Reinigung der Heckfläche des Fahrzeuges (24) normalerweise den Kontakt zur Heckfläche des Fahrzeuges (24) mehr oder weniger verliert, was auf Trägheiten der Steuerungselemente zurückzuführen ist. Wenn man aber das Querjoch (22) mit dem Elektromotor und der elektromagnetischen Kupplung (10) antreibt, kann die vertikale Waschbürste (1) den Übergang von der Seitenfläche zur Heckfläche des Fahrzeuges (24) ohne Kontaktverlust bewältigen. Hierbei ist es förderlich, wenn die Länge des Fahrzeuges am Anfang der Waschstraße durch vorbekannte Mittel gemessen und dementsprechend Steuerimpulse en den elektromagnetischen Antrieb (9,10) gegeben werden.

Eine Alternative zu Figur 3 ergibt sich aus Figur 4, bei der im Querjoch (22) bei (27) ein Schwingenpaar (26) hängend gelagert ist. In diesem Schwingenpaar (26) ist die Laufkatze (6) für eine horizontale Waschbürste (2) auf und abbeweglich und beispielsweise mittels Zugseiles (28) hebbar. Diese Hubbewegung der horizontalen Waschbürste kann entsprechend dem Ausführungsbeispiel der Figur 2 ausgebildet sein.

Zusätzlich ist aber ein Schwenkgetriebe (31) angeordnet, das beispielsweise von einem Ausleger (30) gelenkig auf das Schwingenpaar (26) einwirkt. Der Antrieb für dieses Schwenkgetriebe (31) kann - wie vorstehend beschrieben - durch Elektromotor (9) und elektromagnetischer Kupplung (10) erfolgen.

Die beiden Schwingen des Schwingenpaares (26) befinden sich seitlich von den Seitenflächen des Fahrzeuges (24). Wenn die horizontale Waschbürste (2) etwa den Mittelbereich des Fahrzeugdaches (24) erreicht hat, wird die Drehrichtung umgekehrt, so dass das Schwingenpaar (26) zur Folge der selbstkletternden Eigenschaft der Waschbürste (2) gegen den Uhrzeigesinn ausschwenkt. Sobald aber die horizontale Waschbürste (2) den Übergang des Kofferraumdeckels zur Heckfläche erreicht hat, wird das Schwenkgetriebe (31) eingeschaltet, damit das Schwingenpaar (26) im Uhrzeigersinn dem Fahrzeug (24) nachschwingt, so dass ein gleichmäßiger Anlagedruck der horizontalen Waschbürste (2) am Fahrzeug (24) aufrechterhalten bleibt. Zugleich kann die Laufkatze bzw. das Querjoch (22) in Schlepprichtung (25) voranbewegt werden.

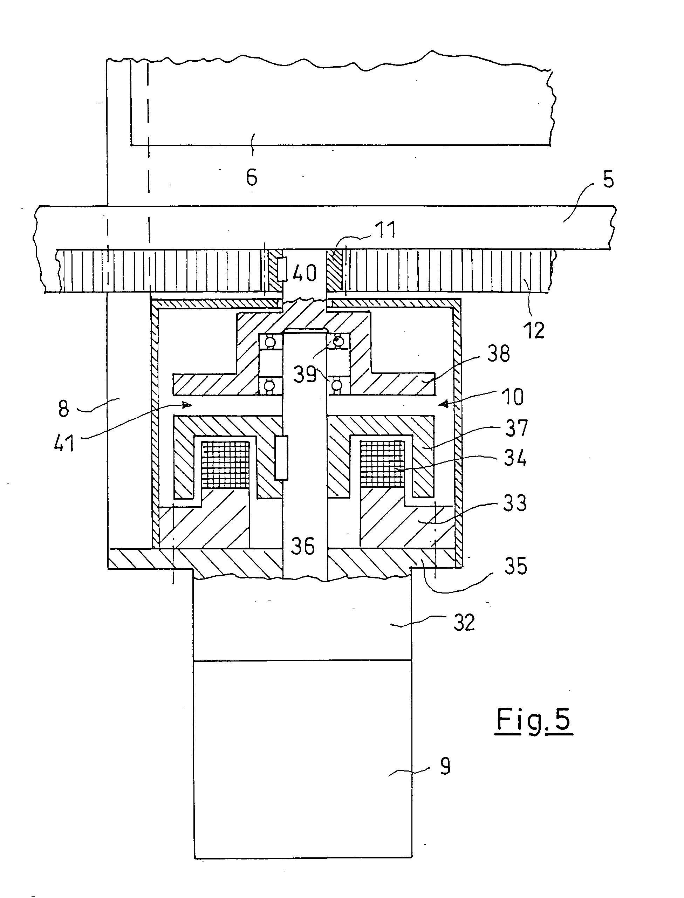

Im Beispiel der Figur 5 sind ein Elektromotor (9) und ein daran sich anschließendes Untersetzungsgetriebe (32) symbolisch dargestellt. Die Antriebswelle (36) dieses Getriebes (32) führt in eine elektromagnetische Kupplung (10), die an einem Ausführungsbeispiel im Schnitt dargestellt ist.

Das Motorgehäuse (35) befindet sich an einem Bügel (8), der zur Laufkatze (6) führt und mit dieser fest verbunden ist. Die Laufkatze (6) ist symbolisch dargestellt.- Mit dem Motorgehäuse (35) ist ein Spulengehäuse (33) fest verbunden, welches eine Magnetspule (34) trägt. Diese wird umgeben von einem Rotor (ferromagnetischer Körper), der mit der Antriebswelle (36) drehschlüssig verbunden ist. In Distanz zu dem Rotor (37) befindet sich ein Anker (38), der auf der Antriebswelle (36) über die Lager (39) drehbar gelagert ist. Zwischen Rotor (37) und Anker (38) befindet sich ein Luftspalt (41), dessen Größe ursächlich für das übertragbare Drehmoment ist. Durch Verstellung des Luftspaltes (41) läßt sich das Drehmoment verändern.

Elektromagnetische Kupplungen (10) dieser Art sind vorbekannt und bedürfen daher keiner Beschreibung ihrer Wirkung.

Im vorliegenden Fall ist der Anker (38) mit der Abtriebswelle (40) verbunden, auf der das Ritzel (11) zum Eingriff in die Zahnstange (12) befestigt ist.

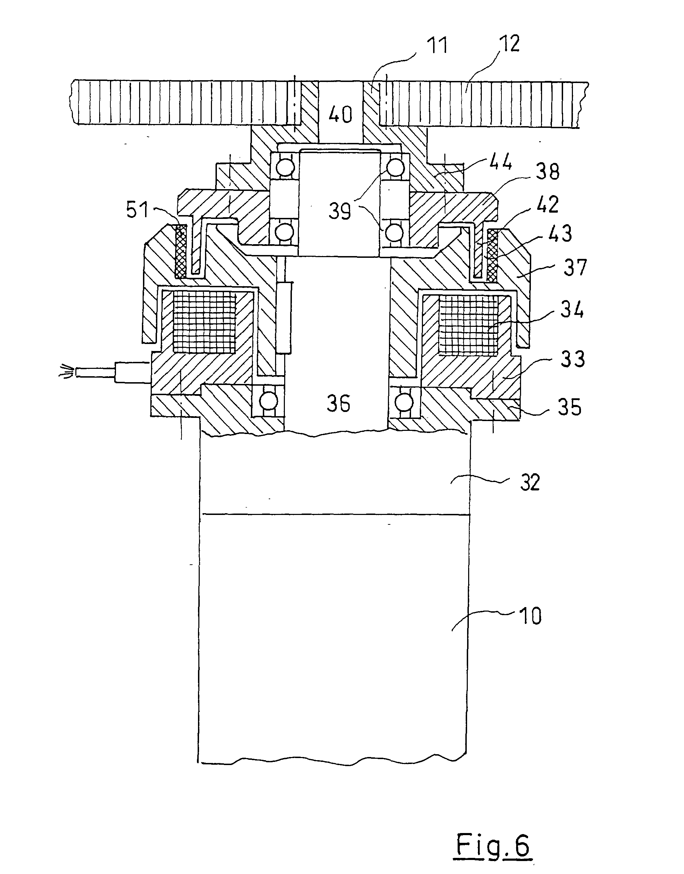

Der Einsatz einer anderen elektromagnetischen Schlupfkupplung ergibt sich aus dem Ausführungsbeispiel der Figur 6. Dort ist im Unterschied zur Figur 5 dargestellt, dass der Anker (38) mit einem Hysterese-Ringkörper (42) in einen Ringspalt (43) des Rotors (37) eingreift, wobei die Veränderung des Drehmomentes durch die Verstellung der Eindringtiefe des Ringkörpers (42) in den Ringspalt (43) herbeigeführt wird. Auch diese Konstruktion der elektromagnetischen Schlupfkupplung (10) ist vorbekannt, wobei auch Permanentmagnete (51) stellenweise zur Begrenzung des Ringspaltes (43) vorgesehen werden können.

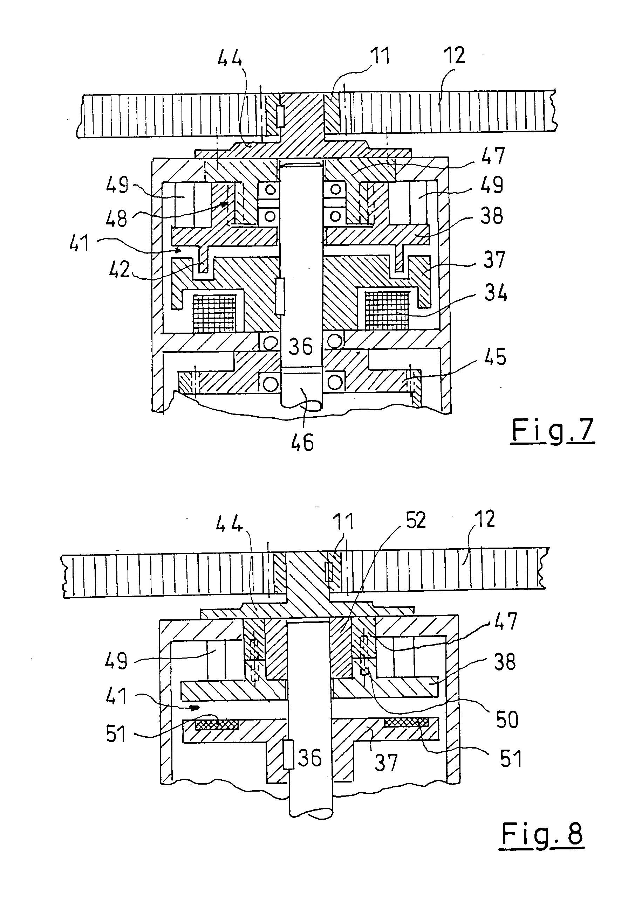

In den Ausführungsbeispielen der Figuren 7 und 8 ist dargestellt, wie man den Luftspalt (41) verstellen kann. Zu diesem Zweck ist der Anker (38) zweiteilig ausgebildet, wobei eine auf der Antriebswelle (36) drehbar gelagerte Nabe (47) den Anker (38) parallel zur Antriebsachse führt und drehschlüssig hält. Im Beispiel der Figur 7 ist hierzu eine Keilwellenführung (48) vorgesehen. Verstellorgane (49) sind symbolisch dargestellt, um die axiale Distanzieung von Nabe und Anker (38) herbeizuführen. Diese Verstellorgane (49) können mechanischer, hydraulischer, pneumatischer oder elektrischer Art sein.

Mit der Nabe (47) ist ein Deckel (44) verbunden, der seinerseits die Abtriebswelle (40) und das Ritzel (11) trägt.

Mit (45) ist symbolisch ein Abtriebsrad eines Untersetzüngsgetriebes (32) dargestellt, das zwischen dem Elektromotor (9) und der elektromagnetischen Kupplung (10) sich befindet.

Im Beispiel der Figur 8 erfolgt die axiale Verstellung zwischen der Nabe (47) und dem Anker (-38) durch im Umfang verteilte Führungsstifte (50), welche den Drehschluss zwischen Nabe (52) und Anker (38) gewährleisten, aber eine axiale Verstellung des Ankers (38) ermöglichen. Auch hier sind Verstellorgane (49) entsprechend dem Beispiel der Figur 7 vorgesehen.

Alternativ kann am Rotor (ferromagnetischer Körper) (37) eine Vielzahl von Dauermagneten (51) verteilt angeordnet sein, um das Drehmoment auf den Anker (38) zu übertragen. Die Nabe (47) und der Anker (38) sind auf einem symbolisch dargestellten Gleitlager (52) drehbar gegenüber der Antriebswelle (36) gelagert.

### STÜCKLISTE

- 1: vertikale Waschbürste
- 2: horizontale Waschbürste
- 3: ortsfestes oder hin-und herbwegliches Portal
- 4: Pfosten
- 5: Querträger aus Leichtmetall-Strangpreß-Hohlprofil
- 6: Laufkatze
- 7: Laufrolle
- 8: Bügel
- 9: Elektromotor
- 10: elektromagnetische Kupplung
- 11: Abtriebselement (Ritzel)
- 12: Getriebeteil (Zahnstange oder dergleichen)
- 13: Gelenk
- 14: Achse
- 15: Elektromotor
- 16: Winkelgetriebe
- 17: Bürstenwelle
- 18: Zugseil
- 19: Umlenkrolle
- 20: Elektromotor mit elektromagnetischer Kupplung
- 21: Längsträger
- 22: Querjoch
- 23: Laufrad
- 24: Fahrzeug
- 25: Schlepprichtung
- 26: Schwingenpaar
- 27: Schwenklager
- 28: Zugseil
- 29: Elektromotor mit elektromagnetischer Kupplung
- 30: Ausleger
- 31: Schwenkgetriebe
- 32: Untersetzungsgetriebe
- 33: Spulengehäuse
- 34: Magnetspule
- 35: Motorgehäuse
- 36: Antriebswelle
- 37: Rotor (ferromagnetischer Körper)
- 38: Anker (magnetisierbare Scheibe)
- 39: Lager
- 40: Abtriebswelle
- 41: Luftspalt
- 42: Hysterese-Ringkörper
- 43: Ringspalt
- 44: Deckel
- 45: Untersetzungsgetriebe-Abtriebsrad
- 46: Getriebewelle
- 47: Nabe
- 48: Keilwellenführung
- 49: Verstellorgan
- 50: Führungsstift
- 51: Dauermagnet
- 52: Gleitlager

## Patentansprüche

1. Fahrzeugwaschanlage mit drehbar angetriebenen und in Laufkatzen (6) gelagerten horizontalen (2) und vertikalen (1) Waschbürsten, deren Laufkatzen (6) an einem ortsfesten oder hin- und herbeweglichen Portal (3) linear geführt und angetrieben sind, **dadurch gekennzeichnet, dass** an der einzelnen Laufkatze (6) ein für deren Bewegung bestimmter Elektromotor (9) mit einer nachgeordneten elektromagnetischen Schlupfkupplung (10), insbesondere Hysteresekupplung, befestigt ist, deren Abtriebselement (11) mit einem am Portal (3) angeordneten Getriebeteil (12) zusammenwirkt.

2. Fahrzeugwaschanlage nach Anspruch 1, **dadurch gekennzeichnet, dass** das Abtriebelement (11) als Zahnritzel und das Getriebeteil (12) als Zahnstange ausgebildet ist.

3. Fahrzeugwaschanlage nach Anspruch 1, **dadurch gekennzeichnet, dass** das Abtriebselement (11) und das Getriebeteil (12) als Zahnriemen-, Seil- oder Kettentrieb ausgebildet sind.

4. Fahrzeugwaschanlage nach einem Ansprüche 1 bis 3, **dadurch gekennzeichnet, dass** die einzelne Laufkatze (6) am Querträger (5) eines ortsfesten oder verfahrbaren Portals (3) geführt ist und jeweils eine hängend angeordnete vertikale Waschbürste (1) trägt.

5. Waschanlage nach einem der Ansprüche 1 bis 3, **dadurch gekennzeichnet, dass** die einzelne Laufkatze (6) an beiden Pfosten (4) eines ortsfesten oder verfahrbaren Portals (3) vertikal beweglich geführt ist und eine horizontale Waschbürste (2) trägt, wobei der Elektromotor (9) mit der elektromagnetischen Schlupfkupplung (10) von der Laufkatze (6)- distanziert angeordnet und mit ihr durch ein Getriebeteil (18) verbunden sein kann.

6. Fahrzeugwaschanlage nach einem der Ansprüche 1 bis 3, **dadurch gekennzeichnet, dass** die einzelnen Laufkatze als Bestandteil eines Querjoches (22) ausgebildet ist, das auf Längsträgern (21) eines ortsfesten Portals (3) parallel zur Längsachse des zu waschenden Fahrzeuges (24) hin- und her verschiebbar geführt ist und seinerseits Führungen (5) für Laufkatzen (6) von vertikalen Waschbürsten (1) aufweist.

7. Fahrzeugwaschanlage nach Anspruch 6, **dadurch gekennzeichnet, dass** am Querjoch (22) ein obenseitig hängend gelagertes Schwingenpaar (26) zur Führung von Laufkatzen (6) für eine horizontale Waschbürste (2) angeordnet ist.

8. Fahrzeugwaschanlage nach Anspruch 7, **dadurch gekennzeichnet, dass** die Laufkatzen (6) für die horizontale-Waschbürste (2) mit einem aus Elektromotor (9) und elektromagnetischer Schlupfkupplung (10) bestehenden Hubantrieb (28) längs der Schwingen (26) verstellbar sind und dass der Rotationsantrieb für die horizontale Waschbürste (2) drehrichtungsumkehrbar ausgebildet ist.

9. Fahrzeugwaschanlage nach Anspruch 7 oder 8, **dadurch gekennzeichnet, dass** das Schwingenpaar (26) mit einem aus- Elektromotor (9) und elektromagnetischer Schlupfkupplung (10) bestehenden Schwenkantrieb (31) verbunden ist, der die horizontale Waschbürste (2) speziell beim Bearbeiten der Heckfläche eines geschleppten Fahrzeuges (24) in ständigem Waschkontakt mit der Heckfläche hält.

10. Fahrzeugwaschanlage nach einem der Ansprüche 1 bis 9, **dadurch gekennzeichnet, dass** zwischen dem Elektromotor (9) und der elektromagnetischen Schlupfkupplung (10) ein Untersetzungsgetriebe (32) angeordnet ist.

11. Fahrzeugwaschanlage nach einem der Ansprüche 1 bis 10, **dadurch gekennzeichnet, dass** in der elektromagnetischen Schlupfkupplung (10) eine axial wirkende Einstellanordnung (49) zur Veränderung des Luftspaltes (41) zwischen dem Anker (38) und dem Rotor (37) vorgesehen ist.

12. Fahrzeugwaschanlage nach Anspruch 11, **dadurch gekennzeichnet, dass** der Anker (38) zweiteilig ausgebildet ist und das eine (38) am anderen Teil (47) axial verschiebbar geführt ist.

13. Fahrzeugwaschanlage nach einem der Ansprüche 1 bis 12, **dadurch gekennzeichnet, dass** der Schlupf der Magnetkupplungen mit Hilfe einer anliegenden Spannung an den Magnetspulen variierbar ist.
